# EUROPÄISCHE PATENTSCHRIFT

(11) **EP 1 697 157 B1**
(45) Veröffentlichungstag und Bekanntmachung des Hinweises auf die Patenterteilung: **15.08.2007**
(21) Anmeldenummer: 04790167.3
(22) Anmeldetag: 07.10.2004
(51) Int. Cl.: B60K 15/035

(54) **ENTLÜFTUNGSVENTIL**
BLEED VALVE
SOUPAPE DE PURGE

(30) Priorität: 23.12.2003 DE 20319920 U
(43) Veröffentlichungstag der Anmeldung: 06.09.2006
(73) Patentinhaber: A. Kayser Automotive Systems GmbH, 37574 Einbeck (DE)
(72) Erfinder: MOSES, Erhard, 37574 Einbeck (DE)
(74) Vertreter: Sobisch, Peter
(86) Internationale Anmeldenummer: PCT/EP2004/011194
(87) Internationale Veröffentlichungsnummer: WO 2005/065977

(56) Entgegenhaltungen:
- US-A- 4 982 757
- US-A- 5 439 023
- US-A- 5 755 252
- US-A- 6 035 884
- US-B1- 6 240 950

## Beschreibung

Die Erfindung bezieht sich auf ein Entlüftungsventil entsprechend dem Oberbegriff des Anspruchs 1.

Derartige Entlüftungsventile sind regelmäßig zum vertikalen Einbau in die Wandung des Kraftstofftanks eines Fahrzeugs eingerichtet und dazu bestimmt, eine durchgängige Verbindung zwischen dem Innenraum des Tanks oberhalb eines Kraftstoffpegels und dem Außenraum bereitzustellen, so dass in der Öffnungsposition während des Befüllens Luft aus dem Tank entweichen kann und während des Verbrauchs von Kraftstoff Luft in den Tank einströmen kann, um den Aufbau eines Vakuums zu verhindern. Eine Schließposition des Ventils soll sich bei übermäßiger Befüllung des Tanks oder im Falle einer bezüglich des Tanks von einer oberseitigen wesentlich abweichenden Position des Ventils einstellen, welche einen Unfall bzw. ein Überschlagen des Fahrzeugs signalisiert, so dass ein unkontrolliertes Austreten von Kraftstoff unterbunden werden muss. Es soll somit in Abhängigkeit von dem Betriebszustand des Tanks bzw. des Fahrzeugs in zuverlässiger Weise zwischen einer Öffnungs- und einer Schließposition ein automatisches Umschalten des Ventils eingerichtet sein. Zu berücksichtigen für den Betrieb des Ventils sind insbesondere auch charakteristische, durch den Fahrbetrieb bedingte Fahrzeugbewegungen.

Ein derartiges Ventil ist beispielsweise aus der DE 696 01 135 bekannt. Innerhalb eines zylindrischen, bodenseitig Einlassöffnungen und oberseitig eine Auslassöffnung aufweisenden Gehäuses ist ein Schwimmkörper angeordnet, der mit einer länglichen streifenartigen, flexiblen Membran zusammenwirkt. Der Schwimmkörper ist innerhalb des Gehäuses zwischen einer Öffnungs- und einer Schließposition des Ventils axial bewegbar und bodenseitig über eine Feder gestützt. Die Bewegung des Schwimmkörpers innerhalb des Gehäuses und damit die Schaltstellung des Ventils wird somit quantitativ durch die auf diesen einwirkende, von dem Kraftstoffpegel abhängige Auftriebskraft, eine Massenkraft sowie die Kraft der Feder bestimmt. Die länglich bzw. schlitzartig gestaltete Auslassöffnung bildet auf ihrer, dem Schwimmkörper zugekehrten Seite mit ihrer Berandung einen Ventilsitz für die Membran, die in der Schließposition des Ventils zwischen dem sich schräg zu der Achse des Gehäuses erstreckenden Ventilsitz und einer sich parallel zu diesem erstreckenden Gegenfläche des Schwimmkörpers fixiert ist. Die Membran ist lediglich an ihrem einen Ende an dem Schwimmkörper befestigt. Aufgrund der Schrägorientierung des Ventilsitzes sowie der Gegenfläche relativ zu der Achse des Gehäuses und damit der Bewegungsrichtung des Schwimmkörpers ist der Öffnungsvorgang des Ventils durch ein allmähliches Ablösen der Membran von dem Ventilsitz gekennzeichnet.

Aus der US 6,240,950 ist ein Entlüftungsventil gemäß dem Oberbegriff des Anspruchs 1 bekannt, bei welchem in einem Gehäuse ein Schwimmkörper angeordnet ist, der auf seiner Oberseite einen zylindrischen Aufsatz trägt, aus dessen ebener Oberseite unter Zwischenanordnung eines konischen Übergangsbereiches ein Führungsdorn achsparallel zu der Achse des Gehäuses herausragt. Der Führungsdorn durchdringt eine zentrale Öffnung eines Dichtelementes, welches auf einer Stützscheibe aufliegt, an der unterseitig, den zylindrischen Aufsatz außenseitig umgreifend eine Führungsmuffe angeformt ist. An dem freien Ende der Führungsmuffe ist innenseitig ein Ringvorsprung angeformt, der im Zusammenwirken mit einem am oberen Ende des Aufsatzes außenseitig angeformten Ringvorsprung die axiale Verschiebbarkeit der Stützscheibe und damit des Dichtelements definiert. Das genannte Gehäuse steht über Einlassöffnungen mit dem Innenraum des Tanks in Verbindung, so dass es nach Maßgabe des Flüssigkeitsstandes zu einem Aufschwimmen des unterseitig federbelasteten Schwimmkörpers kommt, und zwar bis zu einem Anliegen des Dichtelements an einem sich senkrecht zu der Längsachse des Gehäuses erstreckenden Ventilsitz, der in eine Auslassöffnung einmündet. Zwar ist aufgrund der Verbindung der Stützscheibe mit dem zentralen Aufsatz des Schwimmkörpers eine faktisch kardanische Beweglichkeit des Dichtelements gegenüber dem Schwimmkörper gegeben - regelmäßig erstrecken sich jedoch aufgrund der zu der Längsachse des Gehäuses konzentrischen Anordnung der Ringvorsprünge der Führungsmuffe und des Aufsatzes das Dichtelement und der Ventilsitz parallel zueinander, welches sich erschwerend beim Ablösen des Dichtelements von dem Ventilsitz auswirken kann.

Aus der US 4,753,262 ist ein weiteres Entlüftungsventil für den Kraftstofftank eines Fahrzeugs bekannt, bei welchem in einem zylindrischem, mit bodenseitigen Einlassöffnungen versehenen Gehäuse ein Schwimmkörper axial beweglich angeordnet ist, der wiederum bodenseitig über eine Feder abgestützt ist. Das Gehäuse ist mit einer oberseitigen Auslassöffnung versehen, deren, dem Schwimmkörper zugekehrte Seite einen kreisringförmigen Ventilsitz bildet, der mit einer Membran in Wirkverbindung steht. Auf der Oberseite des Schwimmkörpers befindet sich ein, einen Käfig für die Membran bildendes Rückhalteelement, welches durch in Umfangsrichtung gleichförmig verteilt angeordnete Finger gekennzeichnet ist, durch deren freie Enden die Membran in radialer Richtung teilweise übergriffen wird. Die Finger weisen in axialer Richtung des Gehäuses unterschiedliche Längen auf, die mit der Maßgabe bemessen sind, dass bei einer abwärts gerichteten Bewegung des Schwimmkörpers, durch welche die Auslassöffnung freigegeben wird, der Öffnungsvorgang an der Stelle des Umfangs der Auslassöffnung beginnt, die dem axial kürzesten Finger zugeordnet ist, so dass wiederum ein allmählich einsetzender Öffnungsvorgang gegeben ist. Der Ventilsitz erstreckt sich gleichermaßen wie eine Gegenfläche des Schwimmkörpers senkrecht zu der Achse des Gehäuses.

Es ist vor diesem Hintergrund die Aufgabe der Erfindung, ein Entlüftungsventil der eingangs bezeichneten Gattung dahingehend auszugestalten, dass eine verbesserte Führungswirkung auf das Dichtelement sowohl während der Öffnungs- als auch während der Schließbewegung des Ventils ausgeübt wird, insbesondere unter Berücksichtigung von aus dem Fahrbetrieb resultierenden Lageänderungen des Ventils. Gelöst ist diese Aufgabe bei einem solchen Entlüftungsventil durch die Merkmale des Kennzeichnungsteils des Anspruchs 1.

Erfindungswesentlich ist hiernach, dass in Abweichung von dem eingangs dargelegten Stand der Technik als Gegenfläche für das Dichtelement nicht eine strukturell mit dem Schwimmkörper fest verbundene Fläche sondern die, dem Dichtelement zugekehrte Seite einer Stützscheibe fungiert, die ihrerseits gegenüber dem Schwimmkörper kardanisch angelenkt ist. Dies bedeutet, dass Lageveränderungen, insbesondere Schräglagen, die aus dem Fahrbetrieb resultieren, in einem definierten Rahmen ausgleichbar sind, so dass die Dichtungsfunktion nicht beeinträchtigt wird. Die Stützscheibe wird sich regelmäßig werkstofflich in Anbetracht ihrer Funktion von dem Dichtelement unterscheiden und aus einem im Vergleich zu dem Dichtelement relativ härteren, unelastischeren Werkstoff, vorzugsweise Kunststoff bestehen. Das Dichtelement hingegen erfährt eine, dessen Gestalt stabilisierende Stützwirkung und kann dementsprechend aus einem, an die Erfüllung einer Dichtungsfunktion angepassten, relativ weicheren Werkstoff bestehen. Diese Maßnahmen führen zu einer verbesserten Führung des Dichtelements bei gleichzeitiger Verbesserung der Zuverlässigkeit der Dichtung.

Ein Öffnungsvorgang nach Maßgabe einer ungleichförmigen, an einem Punkt des Umfangs des Ventilsitzes beginnenden und ausgehend von diesem fortschreitenden Ablösung des Dichtelements von dem Ventilsitz ist von Vorteil, um den Kraftaufwand beim Öffnen und Lösen des Ventils zu mindern und damit dessen Zuverlässigkeit zu erhöhen. Es ist eine kardanische Anlenkung des Stützscheibe unter gleichzeitiger Berücksichtigung des an einem Punkt des Umfangs des Ventilsitzes während der Öffnung des Ventils beginnenden Ablösung des Dichtelements eingerichtet. Somit ist die eine der beiden Schwenkachsen durch eine Schräglage gegenüber der Achse des Gehäuses gekennzeichnet. Die andere Schwenkachse erstreckt sich senkrecht zu der Achse des Gehäuses. Für den Fall eines nichtzylindrischen Gehäuses gilt Vergleichbares bezüglich dessen Längserstreckung.

Das Gehäuse und der in diesem befindliche Schwimmkörper können einen bezüglich einer zentralen Achse rotationssymmetrischen Aufbau aufweisen, so dass sich der Schwimmkörper zwischen der Öffnungs- und der Schließstellung des Ventils global in der Richtung der Achse des Gehäuses bewegt. Eine von der rotationssymmetrischen Gestalt abweichende Gestaltung des Gehäuses und des Schwimmkörpers ist jedoch gleichermaßen möglich. Entsprechend den Merkmalen der Ansprüche 2 und 3 kann der Ventilsitz in einer senkrecht zu der Achse des Gehäuses oder zu dessen Längserstreckung erstreckenden Ebene angeordnet sein.

Die Merkmale der Ansprüche 4 und 5 sind auf die Verbesserung der auf die Bewegung der Stützscheibe ausgeübten Führungswirkung gerichtet. Diese Maßnahmen verbessern insgesamt die Reproduzierbarkeit der Bewegungen der Stützscheibe, die Zuverlässigkeit der Dichtungswirkung sowie die Leichtgängigkeit der genannten Bewegungen.

Die Erfindung wird im Folgenden unter Bezugnahme auf das in den Zeichnungen beispielhaft wiedergegebene Ausführungsbeispiel näher erläutert werden. Es zeigen:
Fig. 1 eine Darstellung der wesentlichen Komponenten des erfindungsgemäßen Entlüftungsventils nach Art einer Explosionsdarstellung;
Fig. 2 eine Darstellung des Entlüftungsventils gemäß Fig. 1 im Axialschnitt in der Öffnungsstellung;
Fig. 3 eine Darstellung des Entlüftungsventils gemäß Fig. 1 im Axialschnitt in der Schließstellung;
Fig. 4 eine Darstellung des Entlüftungsventils gemäß Fig. 1 im Axialschnitt zu Beginn eines erneuten Öffnens;
Fig. 5 eine Darstellung einer Draufsicht auf den Schwimmkörper entsprechend einer Blickrichtung V-V der Fig. 1;
Fig. 6 eine Darstellung des Einbauzustands des Entlüftungsventils im Schnitt und in einer Teilansicht.

Im Folgenden wird zunächst auf die Zeichnungsfiguren 1 bis 2 und 5 Bezug genommen. Das Entlüftungsventil besteht hiernach aus einem zylindrischen Gehäuse 1, das oberseitig durch einen vorzugsweise lösbar eingesetzten Deckel 2 abgeschlossen ist und einem innerhalb des Gehäuses 1 in Richtung dessen Achse 5 beweglich angeordneten global ebenfalls zylindrischen Schwimmkörper 3.

Der Schwimmkörper 3 kann innerhalb des Gehäuses 1 bezüglich dessen Achse mit an sich bekannten formschlüssig wirksamen Mitteln unverdrehbar geführt sein.

Das Gehäuse 1 ist oberseitig mit zwei einander benachbarten Einlassöffnungen 4 versehen und in dem Deckel 2 befindet sich eine koaxial zu der Achse 5 erstreckende Auslassöffnung 6. Letztere endet außenseitig in einem zur Anbindung einer Ausgangsleitung bestimmten Anschlussstutzen 7.

Der Schwimmkörper 3 ist in an sich bekannter Weise unterseitig über eine nicht dargestellte Feder auf dem Boden 1 des Gehäuses 1 abgestützt, deren Wirkungsweise im Folgenden noch erläutert werden wird. Er ist mit einer zu seiner Unterseite 3' hin offenen ringzylinderartigen, sich im wesentlichen koaxial zu der Achse 5 erstreckenden Kammer 8 versehen, auf deren geschlossen ausgebildetem Kammerboden 9 die genannte Feder abgestützt ist.

Die Oberseite 3" des Schwimmkörpers 3 ist durch eine kranzartige, sich im wesentlichen koaxial zu der Achse 5 erstreckende Anordnung von untereinander gleich beschaffenen Stützfingern 10 gekennzeichnet, die nach Maßgabe gleichförmiger peripherer Abstände einstückig mit dem Schwimmkörper 3 geformt sind und aus dessen im übrigen ebener, bezüglich der Achse 5 radialen Oberseite herausragen. Mit 11 ist ein mittig innerhalb der kranzartigen Anordnung befindlicher, aus der Oberseite 3" herausragender, in etwa kreispyramidenförmiger Führungsdorn bezeichnet, dessen Bedeutung im Folgenden noch erläutert werden wird. Er weist in dem gezeigtem Ausführungsbeispiel eine geringere axiale Erstreckung als die Stützfinger 10 auf.

Mit 12 ist eine Stützscheibe bezeichnet, die im peripheren Bereich eine Ringstufe bildet, an die sich ein Ringflansch 13 anschließt. Die Stützscheibe 12 weist eine mittige kreisförmige Öffnung 14 auf, in welche ein einstückig mit einer Dichtscheibe 15 als Dichtelement ausgebildeter, zylindrischer Ansatz 16 hineinragt, durch welchen die Dichtscheibe lösbar mit der Stützscheibe 12 in Verbindung steht. Die Dichtscheibe 15 überlagert die Stützscheibe 12 auf deren, dem Schwimmkörper 3 abgekehrter Seite. Die Stützscheibe 12 umgreift mit ihrer Ringstufe die Außenseite der Anordnung von Stützfingern 10 und erfährt durch diese eine im wesentlichen axial gerichtete Führungswirkung. Eine Führungs- bzw. Zentrierungswirkung wird auch durch den genannten Führungsdorn 11 ausgeübt, der in das diesem zugekehrte Ende des Ansatzes 16 hineinragt. Der Ansatz 16 bildet im übrigen eine durchgängige Verbindung 16' zwischen seinem, dem Führungsdorn 11 zugekehrten und seinem dem Ventilsitz 19 zugekehrten Ende.

Mit 17, 17' sind zwei, einander diametral gegenüberliegend an dem Schwimmkörper 3 befestigte, zum formschlüssigen Übergreifen des genannten Ringflansches 13 bestimmte, winkelartige Rückhalteelemente bezeichnet, deren axiale Längen unterschiedlich bemessen sind. Dies bedeutet, dass die zur Verfügung stehenden Bewegungsmöglichkeiten der Stützscheibe 12 gegenüber den beiden Rückhalteelementen 17, 17' dementsprechend unterschiedlich ausfallen. In jedem Fall erfährt das Gesamtsystem bestehend aus Stütz- und Dichtungsscheibe 12, 15 nach Maßgabe der Bemessung der beiden Rückhalteelemente 17, 17' eine angenähert kardanische Aufhängung an bzw. Beweglichkeit gegenüber dem Schwimmkörper.

Die Auslassöffnung 6 ist durch ein, sich koaxial zu der Achse 5 erstreckendes, vergleichsweise kurzes, in das Gehäuse 1 hineinragendes Rohrelement 18 gekennzeichnet, dessen freies Ende 19'einen Ventilsitz 19 für die Dichtscheibe 15 bildet.

Ein derartiges Entlüftungsventil ist - wie Fig. 6 im Einzelnen zeigt - zum Einbau in die oberseitige Wandung 20 des Kraftstofftanks 21 eines Fahrzeugs bestimmt. Der Kraftstofftank ist bis zu einem zulässigen Pegel 22 gefüllt, so dass bei der dargestellten Einbauweise, bei welcher sich das Gehäuse 1 nahezu vollständig innerhalb des Tanks befindet, die Einlassöffnungen 4 lediglich mit dem Kopfraum 23 oberhalb der Flüssigkeit kommunizieren. Andere Montagearten des Entlüftungsventils, bei denen sich das Gehäuse im wesentlichen außerhalb des Tanks befindet, sind gleichermaßen möglich, wobei dementsprechend die Einlassöffnungen anders platziert werden müssen. Hierauf soll jedoch im Folgenden nicht näher eingegangen werden.

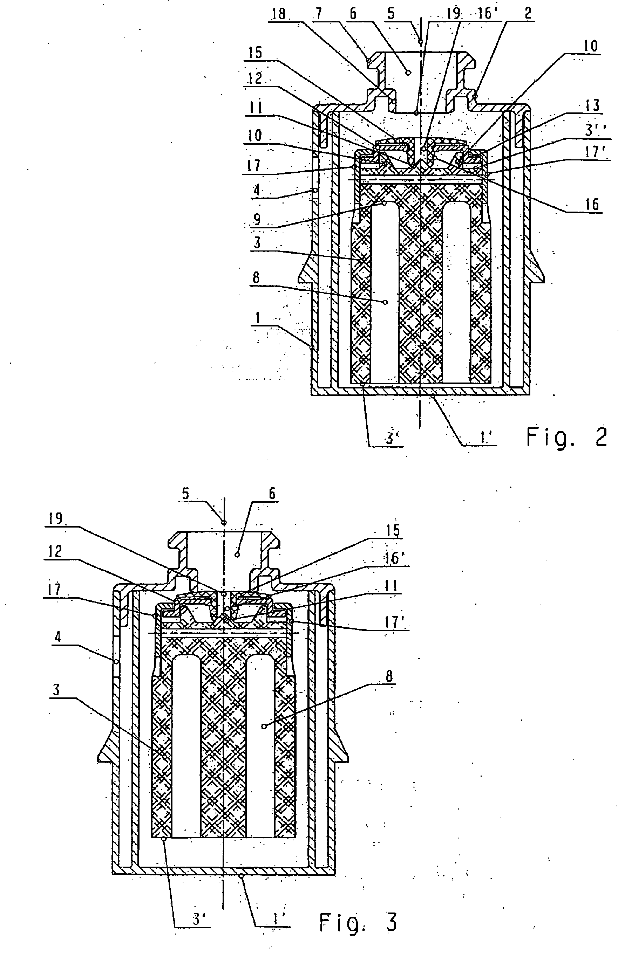

Wie an sich bekannt, bestimmt sich die Position des Schwimmkörpers 3 innerhalb des im Einbauzustand vertikal orientierten Entlüftungsventils nach Maßgabe der auf diesen einwirkenden Kräfte, nämlich einer auf dessen Unterseite 3'einwirkenden Federkraft, einer Auftriebskraft in Abhängigkeit von dem Flüssigkeitspegel Innerhalb des Gehäuses 1 und einer Massenkraft, wobei die genannte Feder in Verbindung mit dem Werkstoff des Schwimmkörpers 3 mit der Maßgabe gewählt ist, das in der, in Fig. 2 dargestellten Öffnungsstellung des Ventils, die regelmäßig durch das Fehlen einer Auftriebskraft gekennzeichnet ist, die Federkraft durch die Massenkraft des Schwimmkörpers 3 einschließlich der mit diesem in Verbindung stehender Teile überwunden wird und der Schwimmkörper 3 auf den Boden 1' des Gehäuses 1 absinkt. In diesem Fall ist eine durchgängige Verbindung zwischen den Einlassöffnungen 4 und der Auslassöffnung 6 gegeben, so dass eine Belüftung und gleichermaßen eine Entlüftung des Tanks im wesentlichen behinderungsfrei möglich sind. Die Dichtscheibe 15 weist in dieser Stellung somit keinen Kontakt mit dem Ventilsitz auf und es liegt die Stützscheibe 12 unterseitig auf dem Führungsdorn 11 auf, der gleichzeitig eine Zentrierungswirkung auf die Dichtscheibe bzw. die Stützscheibe ausübt. Eine radiale Führungswirkung wird auch durch die Stützfinger 10 ausgeübt, deren radiale Außenseiten mit geringem Abstand zu der radialen Innenseite der Ringstufe der Stützscheibe 12 angeordnet sind.

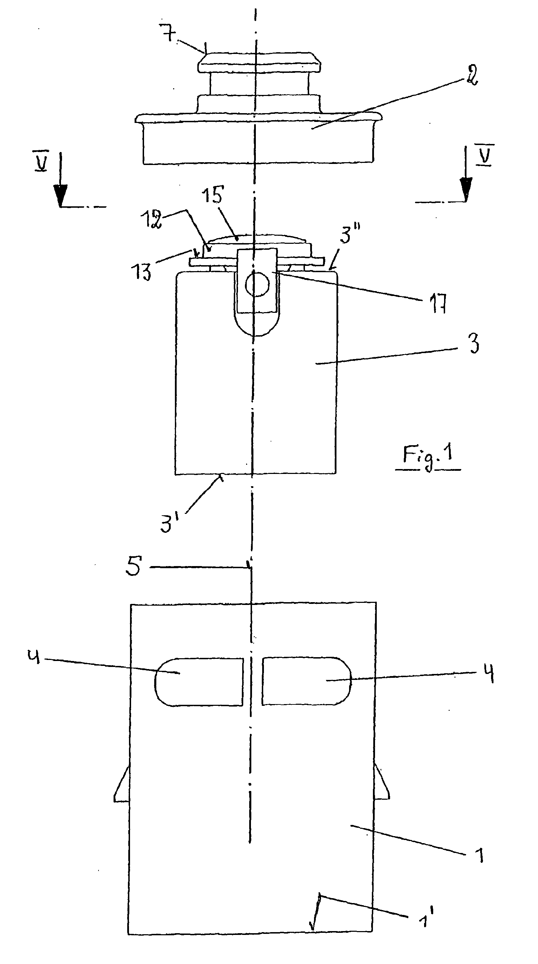

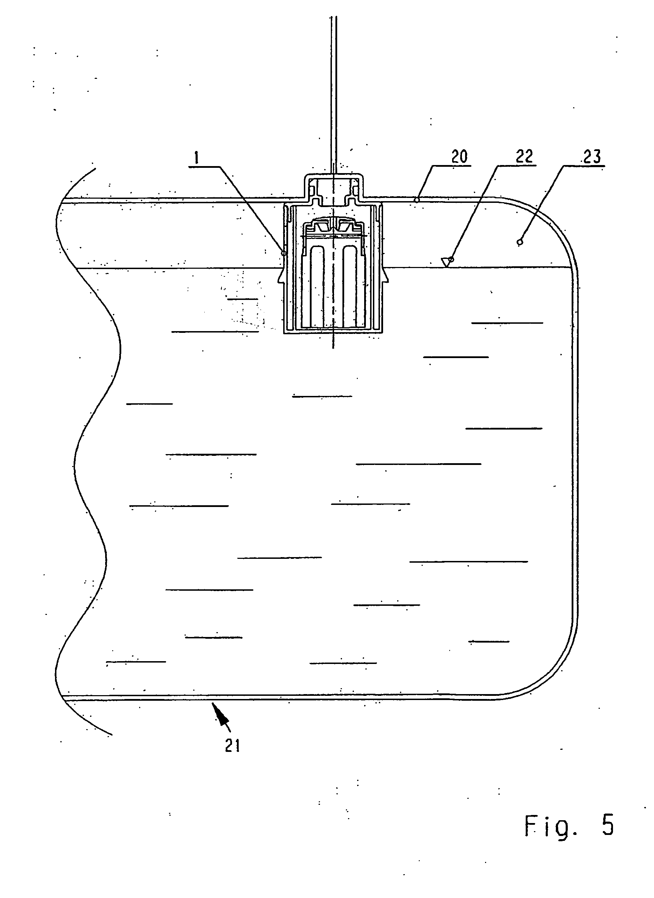

Im Folgenden wird ergänzend auf die Zeichnungsfiguren 3, 4 Bezug genommen, in denen Funktionselemente, die mit denjenigen der Figuren 1, 2, 5 oder 6 übereinstimmen, entsprechend beziffert sind, so dass auf eine diesbezügliche wiederholte Beschreibung verzichtet werden kann.

Der in Fig. 3 gezeigte Schließzustand des Entlüftungsventils ist dadurch gekennzeichnet, dass sich der Schwimmkörper 3 beispielsweise unter dem Einfluß einer zusätzlich zu der Federkraft sowie den genannten Massenkräften wirkenden Auftriebskraft innerhalb des Gehäuses 1 in Richtung auf den Deckel 2 hin bewegt hat, so dass die Dichtscheibe 15 an dem Ventilsitz 19 anliegt. Infolge der stabilisierenden Wirkung der Stützscheibe 12 ist eine zuverlässige und reproduzierbare Dichtungswirkung gegeben. Gleichzeitig wird in dieser Stellung der Ansatz 16 in eine dichtende Anlage gegen den Führungsdorn 11 gedrückt. Die Rückhalteelemente 17, 17' sind in dieser Stellung des Ventils funktionslos.

Der Schließzustand des Entlüftungsventils kann eintreten infolge einer Überfüllung des Tanks oder im Fall einer von der vertikalen wesentlich abweichenden Orientierung der Lage der Achse des Ventils, welche durch entsprechende Fahrzeugbewegungen, insbesondere Schwingungen, Kurvenfahrten wechselnder Orientierung, jedoch auch einen Unfall, z. B. einen Überschlag des Fahrzeugs ausgelöst werden kann.

Infolge der kardanischen Aufhängung der Dichtscheibe 15 ist in einem, von der unterschiedlichen Bemessung der Rückhalteelemente 17, 17'abhängigen Ausmaß eine gleichmäßige Dichtungswirkung entlang des Ventilsitzes 19 sowie des Führungsdornes 11 auch bei einer Schräglage des Ventils gegeben, da ein Versatz der Achsen des Schwimmkörpers 3 und des Gehäuses 1 ausgleichbar ist.

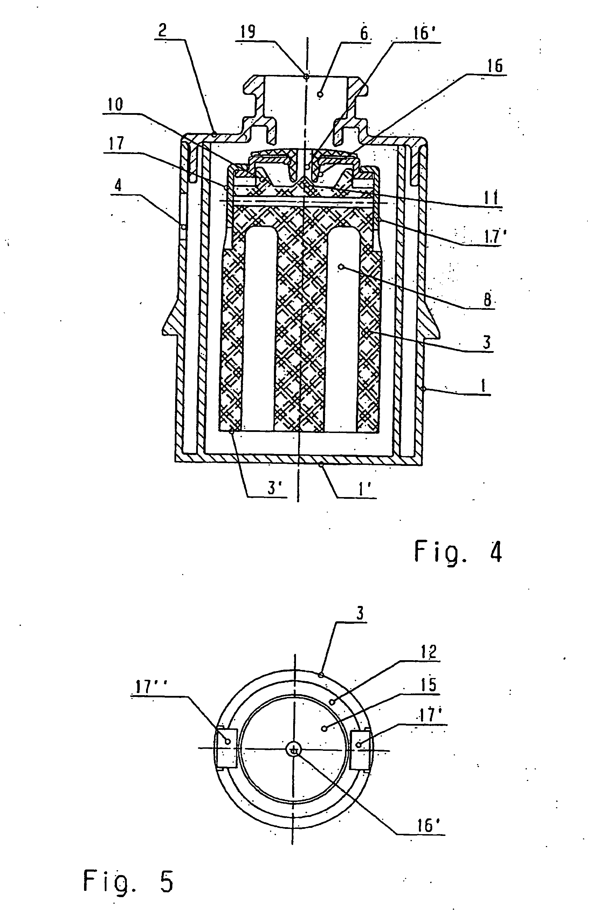

Der in Fig. 4 gezeigte Zustand eines beginnenden erneuten Öffnens des Ventils im Anschluß an einen Schließzustand ist durch ein allmähliches Ablösen der Dichtscheibe 15 von dem Ventilsitz 19 gekennzeichnet, wobei der Ablösevorgang infolge einer Bewegung des Schwimmkörpers 3 in Richtung auf den Boden 1' des Gehäuses 1 hin durch das axial relativ kürzere Rückhalteelement 17 eingeleitet wird und dementsprechend die Öffnung an einem Punkt des Umfangs des Ventilsitzes beginnt, so dass es zu einer vorübergehenden Schräglage der Dichtscheibe 15 gegenüber der Achse 5 kommt. Der zum Ablösen erforderliche Kraftaufwand kann auf diesem Wege klein gehalten werden.

Der Ablösevorgang führt ferner zunächst auch zu einem Abheben des Ansatzes 16 von dem Führungsdorn 11, mit der Folge, dass ausgehend von den Einlassöffnungen 4 eine durchgängige Verbindung 16' über den Ansatz 16 mit der Auslassöffnung gegeben ist, wodurch der Ablösevorgang weiter erleichtert wird.

Ein derartiges Entlüftungsventil, insbesondere dessen Gehäuse kann in der Wandung des Kraftstofftanks angeordnet sein, hierbei eine außenseitig auftragende Struktur bilden oder auch wenigstens teilweise in den Tank hineinragen. Alternativ zu dieser Wandungsbefestigung kommt auch eine besondere Haltevorrichtung in Betracht, in der das Gehäuse aufgenommen ist, die eine Verbindung zu der genannten Auslassöffnung bereitstellt, wobei diese Haltevorrichtung an einer Pumpeneinheit oder einer anderen Komponente gehalten ist oder zusammen mit einem unabhängigen Leitungssystem auf der Innenseite des Tanks angeordnet ist.

Im Ergebnis steht mit dem erfindungsgemäßen Entlüftungsventil ein zur Verwendung bei einem Kraftstofftank bestimmtes Bauelement zur Verfügung, welches sich durch einen einfachen konstruktiven Aufbau auszeichnet und welches allen betrieblichen Anforderungen in zuverlässiger und reproduzierbarer Weise gerecht wird.

## Patentansprüche

1. Entlüftungsventil für den Kraftstofftank eines Fahrzeugs, mit einem, zur Befestigung in der Wandung des Tanks bestimmten Gehäuse (1), welches oberseitig eine Auslassöffnung (6) und im Übrigen wenigstens eine mit dem Kopfraum (23) des Tanks zu verbindende Einlassöffnung (4) aufweist, wobei innerhalb des Gehäuses (1) ein mittels einer Feder auf dessen Boden (1') gestützter Schwimmkörper (3) in Längsrichtung des Gehäuses (1) beweglich angeordnet ist, wobei im Bereich der Auslassöffnung (6) ein durch deren Berandung definierbarer Ventilsitz (19) gebildet ist, der mit einem nach Maßgabe der Bewegung des Schwimmelements (3) zwischen einer die Auslassöffnung (6) schließenden und einer diese freigebenden Stellung bewegbaren Dichtelement 15 in Wirkverbindung steht, wobei in der Schließstellung des Ventils das Dichtelement 15 zwischen dem Ventilsitz (19) einerseits und einer, mit dem Schwimmelement (3) in Verbindung stehenden Gegenfläche andererseits fixiert ist, wobei das Dichtelement 15 auf einer ihm zugekehrten Seite einer die genannte Gegenfläche bildenden Stützscheibe (12), mit dieser in Verbindung stehend, angeordnet ist **dadurch gekennzeichnet, daß** die Stützscheibe (12) an dem Schwimmkörper (13) kardanisch angelenkt ist, wobei zwei zueinander senkrechte Schwenkachsen vorgesehen sind, um welche die Stützscheibe (12) schwenkbar an dem Schwimmkörper (3) angelenkt ist, wobei die eine der beiden Schwenkachsen eine Schräglage gegenüber der Längsrichtung des Gehäuses bzw. der Achse (5) des zylindrischen Gehäuses (1) aufweist, und wobei an dem Schwimmkörper (3) zwei einander diametral gegenüberliegende winkelartige Rückhalteelemente (17,17') befestigt sind, die zum Übergreifen eines an der Stützscheibe (12) angeformten Ringflansches (13) eingerichtet sind, deren axiale Erstreckungen ausgehend von dem Schwimmkörper (3) bis zur formschlüssigen Anlage an dem Ringflansch (13) zur Bildung der einen, eine Schräglage gegenüber der Längsrichtung des Gehäuses bzw. der Achse (5) des zylindrischen Gehäuses (1) aufweisenden Schwenkachse unterschiedlich bemessen sind.

2. Entlüftungsventil nach Anspruch 1 oder 2, **dadurch gekennzeichnet, dass** sich der Ventilsitz (19) radial bezüglich der Achse (5) des zylindrischen Gehäuses (1) erstreckt.

3. Entlüftungsventil nach Anspruch 1, **dadurch gekennzeichnet, dass** sich der Ventilsitz senkrecht zu der Längserstreckung des Gehäuses erstreckt.

4. Entlüftungsventil nach einem der Ansprüche 1 bis 3, **dadurch gekennzeichnet, dass** das Dichtelement als Dichtscheibe (15) ausgebildet ist, an der in einem mittleren Bereich ein rohrartiger fluiddurchgängiger Ansatz (16) angeformt ist, der sich durch eine Ausnehmung der Stützscheibe (12) hindurcherstreckt und dass auf der zugekehrten Stirnseite des Schwimmkörpers (3), aus diesem herausragend ein Führungsdorn (11) angeformt ist, der in der Schließstellung des Ventils die zugekehrte Mündung des Ansatzes (16) dichtend verschließt.

5. Entlüftungsventil nach einem der vorangegangenen Ansprüche 1 bis 4, **dadurch gekennzeichnet, dass** auf der, der Stützscheibe (12) zugekehrten Seite des Schwimmkörpers (3) eine kranzartige Anordnung von in peripherer Richtung beabstandeten Stützfingern (10) angeformt ist, deren radiale Außenseite zur Ausübung einer radialen Führungswirkung auf eine zugekehrte Innenfläche der Stützscheibe (12) bestimmt und eingerichtet ist.

## Claims

1. Bleed valve for the fuel tank of a vehicle, having a housing (1) which is intended for attachment in the wall of the tank and which on the topside comprises an outlet orifice (6) and also comprises at least one inlet orifice (4) which is to be connected to the head space (23) of the tank, wherein inside the housing (1) a floating body (3) which is supported by means of a spring on the base (1') of said housing is disposed in such a manner as to be able to move in the longitudinal direction of the housing (1), wherein in the region of the outlet orifice (6) there is formed a valve seat (19) which can be defined by the rim of said outlet orifice and which is operatively connected to a sealing element (15) which can be moved according to the movement of the floating element (3) between a position which closes the outlet orifice (6) and a position which opens same, wherein in the closed position of the valve the sealing element (15) is fixed between on the one hand the valve seat (19) and on the other hand a counter surface which is connected to the floating element (3), wherein the sealing element (15) is disposed on and connected to a support disc (12) on a side, facing said sealing element, of the support disc forming the said counter surface, **characterised in that** the support disc (12) is articulated in a cardanic manner on the floating body (13), wherein two mutually perpendicular pivot axes are provided, about which the support disc (12) is pivotally articulated on the floating body (3), wherein one of the two pivot axes has an inclined position with respect to the longitudinal direction of the housing or the axis (5) of the cylindrical housing (1), and wherein two mutually diametrically opposed, angular retainer elements (17, 17') are attached to the floating body (3), are arranged for engagement over an annular flange (13) integrally formed on the support disc (12) and their axial extensions are dimensioned differently starting from the floating body (3) up to the positive-locking abutment against the annular flange (13) to form the one pivot axis which comprises an inclined position with respect to the longitudinal direction of the housing or of the axis (5) of the cylindrical housing (1).

2. Bleed valve as claimed in claim 1 or 2, **characterised in that** the valve seat (19) extends in a radial manner in relation to the axis (5) of the cylindrical housing (1).

3. Bleed valve as claimed in claim 1, **characterised in that** the valve seat extends perpendicularly with respect to the longitudinal extension of the housing.

4. Bleed valve as claimed in any one of claims 1 to 3, **characterised in that** the sealing element is formed as a sealing disc (15), on which in a central region a tubular, fluid- conveying projection (16) is integrally formed which extends through a cut-out in the support disc (12) and that integrally formed on the facing end side of the floating body (3) is a guide mandrel (11) which protrudes from said floating body and which sealingly closes the facing opening of the projection (16) when the valve is in the closed position.

5. Bleed valve as claimed in any one of the preceding claims 1 to 4, **characterised in that** integrally formed on the side of the floating body (3) facing towards the support disc (12) is a ring-like arrangement of support fingers (10) which are spaced apart in the peripheral direction and whose radial outer side is intended and arranged for exerting a radial guiding effect upon a facing inner surface of the support disc (12).

## Revendications

1. Soupape de purge d'air pour le réservoir de carburant d'un véhicule, avec un boîtier (1) destiné à être fixé dans la paroi du réservoir, qui possède sur sa face supérieure une ouverture de sortie (6) et par ailleurs au moins une ouverture d'entrée (4) à mettre en communication avec l'espace supérieur (23) du réservoir, dans lequel un flotteur (3) est disposé dans le boîtier (1) en s'appuyant sur le fond (1') de celui-ci au moyen d'un ressort de manière mobile dans le sens longitudinal du boîtier (1), dans lequel est formé au niveau de l'ouverture de sortie (6) un siège de soupape (19) pouvant être défini par le bord de celle-ci, qui est en liaison active avec un élément d'étanchéité (15) mobile selon le mouvement du flotteur (3) entre une position fermant l'ouverture de sortie (6) et une position dégageant celle-ci, dans lequel, dans la position de fermeture de la soupape, l'élément d'étanchéité (15) est fixé entre le siège de soupape (19) d'une part et une surface opposée reliée au flotteur (3) d'autre part, dans lequel l'élément d'étanchéité (15) est disposé sur une face tournée vers lui d'une plaque d'appui (12) formant ladite surface opposée, en liaison avec celle-ci, **caractérisée en ce que** la plaque d'appui (12) est articulée par un cardan avec le flotteur (3), deux axes de pivotement perpendiculaires étant prévus autour desquels la plaque d'appui (12) est articulée de manière pivotante sur le flotteur (3), l'un des deux axes de pivotement étant oblique par rapport à là direction longitudinale du boîtier ou à l'axe (5) du boîtier (1) cylindrique, et deux éléments de retenue (17, 17') en forme d'angle diamétralement opposés étant fixés au flotteur (3) et conçus pour passer par-dessus une bride annulaire (13) formée sur la plaque d'appui (12), dont l'étendue axiale entre le flotteur (3) et l'appui en correspondance de forme sur la bride annulaire (13) est dimensionnée pour former l'axe de pivotement incliné par rapport au sens longitudinal du boîtier ou à l'axe (5) du boîtier (1) cylindrique.

2. Soupape de purge d'air selon la revendication 1, **caractérisée en ce que** le siège de soupape (19) s'étend dans le sens radial par rapport à l'axe (5) du boîtier (1) cylindrique.

3. Soupape de purge d'air selon la revendication 1, **caractérisée en ce que** le siège de soupape s'étend perpendiculairement à l'étendue longitudinale du boîtier.

4. Soupape de purge d'air selon l'une des revendications 1 à 3, **caractérisée en ce que** l'élément d'étanchéité est conçu comme une plaque d'étanchéité (15) dans la partie centrale de laquelle un épaulement (16) tubulaire laissant passer le fluide est formé, qui s'étend à travers un évidement de la plaque d'appui (12), et **en ce qu'**il est prévu formé sur la face d'extrémité du flotteur (3) tournée vers lui et dépassant de celle-ci un mandrin de guidage (11) qui ferme de manière étanche l'embouchure de l'épaulement (16) tournée vers lui lorsque la soupape est fermée.

5. Soupape de purge d'air selon l'une des revendications 1 à 4, **caractérisée en ce qu'**il est prévu formée sur la face du flotteur (3) tournée vers la plaque d'appui (12) une disposition en forme de couronne de pattes d'appui (10) écartées dans le sens de la périphérie, dont le côté extérieur dans le sens radial est conçu pour exercer un effet de guidage radial sur une face intérieure de la plaque d'appui (12) tournée vers elles.
